(19) Europäisches Patentamt
European Patent Office
Office européen des brevets

(11) Veröffentlichungsnummer: **0 228 616**
**A2**

(12) # EUROPÄISCHE PATENTANMELDUNG

(21) Anmeldenummer: 86117111.4

(22) Anmeldetag: 09.12.86

(51) Int. Cl.[4]: B 29 C 49/02
B 29 C 45/16

(30) Priorität: 20.12.85 DE 3545162

(43) Veröffentlichungstag der Anmeldung:
15.07.87 Patentblatt 87/29

(84) Benannte Vertragsstaaten:
BE DE FR GB IT NL SE

(71) Anmelder: Battenfeld Fischer Blasformtechnik GmbH
Hermann-Löns-Strasse 7
D-5204 Lohmar 1(DE)

(72) Erfinder: Langecker, Günter, Dr.-Ing.
Beethovenstrasse 26
D-5882 Meinerzhagen 1(DE)

(74) Vertreter: Müller, Gerd et al,
Patentanwälte
HEMMERICH-MÜLLER-GROSSE-POLLMEIER-MEY
Hammerstrasse 2
D-5900 Siegen 1(DE)

(54) **Verfahren und Vorrichtung zum Herstellen von Hohlkörpern aus thermoplastischen Kunststoffen.**

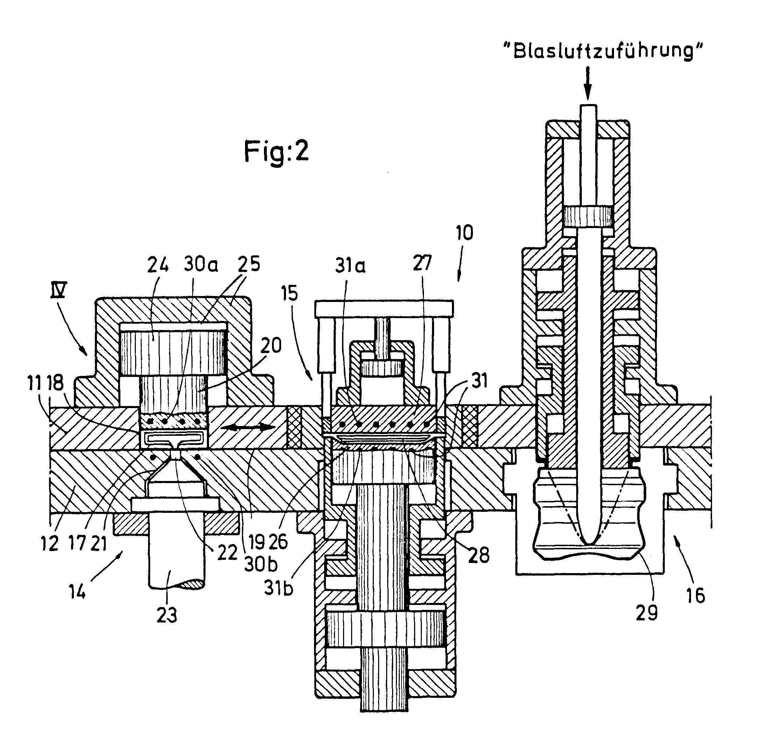

(57) Bei einem Verfahren zum Herstellen von Hohlkörpern aus thermoplastischen Kunststoffen wird zunächst ein kompakter Rohling 17, wie z.B. eine Tablette, eine Pille, eine Scheibe oder dergleichen, insbesondere mit einem Schichtenaufbau aus mehreren verschiedenen und sich gegenseitig umhüllenden bzw. ummantelnden Kunststoffkomponenten, durch Spritzgießen in einem Formhohlraum 18 gebildet. Dann wird dieser Rohling 17 in erhitztem Zustand durch einen Preßvorgang in seiner Dicke vermindert und zugleich in seiner Flächenabmessung vergrößert. Schließlich wird aus dem Preßteil, wiederum in erhitztem Zustand, durch Recken und Blasen in einer Form der Hohlkörper gebildet. Während jedes Spritzvorgangs wird der Formhohlraum 18 mit einer der Eintritts- bzw. Füllgeschwindigkeit des jeweiligen Kunststoffmaterials angepaßten Geschwindigkeit von einem Minimalvolumen bis auf ein vorgegebenes Maximalvolumen verändert. In noch erwärmtem Zustand wird der Spritzling von außen her mindestens bereichsweise durch zusätzliche Wärmebehandlungen konditioniert sowie daraufhin und/oder währenddessen zu dem Preßteil 28 umgeformt und verdichtet, bevor dieses anschließend zum Hohlkörper 29 gereckt und geblasen wird (Figur 2).

"Blasluftzuführung"
Fig:2
10
24
30a
25
31a
27
IV
15
20
11
18
31
12
17
21
22
19
26
30b
31b
28
14
23
29
16

EP 0 228 616 A2

Croydon Printing Company Ltd

Verfahren und Vorrichtung zum Herstellen von Hohlkörpern aus thermoplastischen Kunststoffen

Die Erfindung betrifft ein Verfahren zum Herstellen von Hohlkörpern aus thermoplastischen Kunststoffen, bei welchem zunächst ein kompakter Rohling, wie z.B. eine Tablette, eine Pille, eine Scheibe oder dergleichen, insbesondere mit einem Schichtenaufbau aus mehreren verschiedenen und sich gegenseitig umhüllenden bzw. ummantelnden Kunststoffkomponenten durch Spritzgießen in einem Formhohlraum gebildet wird, bei welchem dann dieser Rohling in erhitztem Zustand durch einen Preßvorgang in seiner Dicke vermindert und zugleich in seiner Flächenabmessung vergrößert wird, und bei welchem schließlich aus dem Preßteil, wiederum im erhitzten Zustand durch Recken und Blasen in einer Form der Hohlkörper gebildet wird.

Zur Herstellung von Hohlkörpern, insbesondere großvolumigen Behältern, ist es bereits bekannt, vorgefertigte Kunststoff-Rohlinge zunächst in erhitztem Zustand durch einen Schmiedevorgang zwischen Gesenkflächen zu bearbeiten und dann aus dem hierdurch gebildeten Kunststoffteil durch Warmverformen, bspw. durch Blasformung, einen Hohlkörper herzustellen, wie das bspw. aus der DE-OS 21 40 341 hervorgeht.

Ebenso wie im Falle der DD-PS 58 373 kann dabei auch nach der DE-OS 21 40 341 der Rohling im Spritzgießverfahren vorgefertigt werden.

Die zwischen den Gesenkflächen zu verformen Spritzgieß-Rohlinge haben zunächst die Form einer relativ dickwandigen Tablette, Pille oder auch Scheibe, die dann durch den Preß-

0228616

vorgang in ihrer Dicke vermindert sowie in ihrer Struktur verdichtet und zugleich in ihrer Flächenabmessung vergrößert wird.

Die durch Spritzgießen vorgefertigten Kunststoff-Rohlinge können noch in der ersten Wärme, also im unmitelbaren Anschluß an den Spritzvorgang durch das Pressen mit biaxialer Orientierung auch zu relativ dünnwandigen Schichten umgeformt werden, die sich dann durch einen Reck-Blas-Prozeß zu dem eigentlichen Hohlkörper umformen lassen.

Bekannt ist es dabei auch, die durch das Pressen zu verformenden Rohlinge mit einem Mehrschichten-Aufbau aus unterschiedlichen Kunststoff-Komponenten zu benutzen. Der Mehrschichten-Aufbau dieser Rohlinge kann dabei unterschiedlichste Schichtenkombinationen aufweisen, wobei diese unterschiedlichen Schichtenkombinationen auch voneinander verschiedene Herstellungsschwierigkeiten verursachen.

Die Schichtdicken der einzelnen Kunststoffkomponenten werden grundsätzlich durch die vorgelegten Volumenströme der einzelnen Materialkomponenten bestimmt. Die Verteilung der Materialkomponenten in radialer Strömungsrichtung hängt jedoch sehr stark von den jeweiligen Fließeigenschaften sowie auch der Fließweglänge ab. Die Fließeigenschaften der einzelnen Materialkomponenten werden durch die Viskosität und das Schmelztemperaturniveau bestimmt. Auch haben die Wandtemperaturen der Spritzgießwerkzeuge einen nicht unerheblichen Einfluß auf die Schichtdickenverteilung während des instationären Füllvorgangs.

Sind bspw. die Viskositäten mehrerer verschiedener Materialkomponenten unter einer bestimmten Scherbelastung gleich, dann bildet sich ein parabolisches Geschwindigkeitsprofil aus. Unterschiedliche Viskositäten der einzelnen Materialkomponenten ergeben hingegen ein zusammengesetztes Geschwindigkeitsprofil mit einem bspw. unstetig parabolischen Verlauf.

Bei ungleichen Wandtemperaturen der Spritzformhälften bilden sich keine einheitlichen Schichtdicken in ein und derselben Materialkomponente aus, vielmehr kann die eine Schicht dieser Materialkomponente dünner ausfallen als die andere Schicht, so daß die Zwischenschicht aus einer anderen Materialkomponente in unerwünschter Weise aus ihrer vorgesehenen mittleren Position herausgeht.

Solche Schichtkonfigurationen der Kunststoff-Vorformlinge sind jedoch in den weitaus meisten Fällen unerwünscht, weil hierdurch die Qualität der durch das Reck-Blasen fertiggestellten Hohlkörper nachhaltig beeinträchtigt wird.

Auch durch das Dünnerpressen und Verdichten der Spritzformlinge vor dem Reck-Blasvorgang zu den in ihrer Flächenabmessung vergrößerten Preßteilen kann diese Unzulänglichkeiten nicht ausräumen.

Es hat sich gezeigt, daß bei der Herstellung von kompakten Rohlingen durch Spritzgießen aus thermoplastischen Kunststoffen besonders dann beträchtliche Schwierigkeiten auftreten, wenn diese ein relativ großes Volumen erhalten und gleichzeitig einen mehrschichtigen Aufbau aufweisen müssen, wenn sie sich zum Reck-Blasen von verhältnismäßig großen Hohlkörpern eignen sollen. Es besteht hierbei nämlich die Gefahr, daß die gewünschte Verteilung des durch den Anspritzkanal in den Formhohlraum geführten Kunststoffmaterial nicht erreicht wird, sich also im Rohling eine unerwünschte Materialschichtung ergibt, die dann auch beim anschließenden Preßvorgang sowie beim Reck-Blasprozeß erhalten bleibt und dann die Brauchbarkeit des fertiggestellten Hohlkörpers in Frage stellt.

Dieser Nachteil läßt sich zwar dadurch vermeiden, daß, wie in der DE-OS 21 40 341 angegeben, die zwischen den Gesenken zu bearbeitenden Rohlinge durch Aufeinanderlegen mehrerer Schichten von Folienzuschnitten aus Kunststoff gebildet werden. Diese Herstellungsart der Rohlinge ist jedoch verhältnismäßig umständlich und teuer. Darüber hinaus lassen sich die aus den Folienschichten gebildeten und zwischen Gesenken bearbeiteten Kunststoffteile nicht in allen Fällen zum Reck-Blasen relativ großvolumiger Hohlkörper benutzen.

Zweck der Erfindung ist es, diesen Nachteilen zu begegnen. Deshalb zielt sie darauf ab, ein Verfahren zum Herstellen von Hohlkörpern aus thermoplastischen Kunststoffen anzugeben, das einerseits eine einwandfreie Materialverteilung im Formhohlraum auch dann gewährleistet, wenn die Rohlinge einen Schichtaufbau aus mehreren verschiedenen Kunststoff-Komponenten aufweisen müssen. Andererseits liegt aber der Erfindung auch die Aufgabe zugrunde, den durch das Spritzgießen erhaltenen Schichtenaufbau der Rohlinge bei deren Umformen zu einem in der Dicke verminderten und zugleich in der Flächenabmessung vergrößerten Preßteil für den späteren Reck-Blasprozeß unter Dickenvergleichmäßigung weiter zu optimieren.

Die verfahrenstechnische Lösung dieser Aufgaben wird nach dem Kennzeichen des Anspruchs dadurch erreicht, daß während jedes Spritzvorgangs der Formhohlraum mit einer der Eintritts- bzw. Füllgeschwindigkeit des jeweiligen Kunststoffmaterials angepaßten Geschwindigkeit von einem Minimalvolumen bis auf ein vorgegebenes Maximalvolumen verändert wird, daß dann der Spritzling in noch erwärmtem Zustand aus dem Formhohlraum gebracht und von außen her mindestens bereichsweise durch zusätzliche Wärmebehandlungen konditioniert wird, und daß daraufhin und/oder währenddessen der Spritzling zu dem Preßteil umgeformt und verdichtet sowie dieses anschließend zum Hohlkörper gereckt und geblasen wird.

Es hat sich gezeigt, daß durch diese erfindungsgemäßen Verfahrensmaßnahmen besonders die Herstellung qualitativ hochwertiger Hohlkörper, und zwar insbesondere mehrschsichtiger, biaxial orientierter Weithalsgefäße mit großem Durchmesser-Höhenverhältnis möglich ist.

An diesen Hohlkörpern können dabei insbesondere dünne, aber gleichmäßige Barriereschichten aus hochwertigen und teuren Kunststoffkomponenten erzeugt werden. Auch wird sichergestellt, daß die inneren Materialschichten mit Sicherheit in den Öffnungsrandbereichen der Hohlkörper von der äußeren Schicht umschlossen sind und daher die Einbettung der Barriereschicht im Öffnungsbereich des Gefäßes gewährleistet bleibt.

Das flachgedrückte Preßteil läßt sich in seiner Dicke auf den nachfolgenden Reck-Blas-Prozeß abstimmen, so daß der spätere Hohlkörper eine gleichmäßige Wanddickenverteilung aufweist.

Gemäß Anspruch 2 kann nach der Erfindung die Volumensänderung des Formhohlraums stetig bzw. kontinuierlich vorgenommen werden. Nach Anspruch 3 ist dabei die besonders vorteilhafte Möglichkeit vorgesehen, daß das Volumen des Formhohlraumes durch Quellströmung des Kunststoffmaterials verändert wird.

Die Volumensänderung des Formhohlraums läßt sich nach der Lehre des Anspruchs 4 erfindungsgemäß aber auch intermittierend bzw. diskontinuierlich vornehmen, wobei dann die Änderungsschritte auf die jeweils eingespritze Menge des betreffenden Kunststoffmaterials abgestimmt werden.

Als wichtiges Verfahrensmerkmal hat sich nach Anspruch 5 erwiesen, daß die Volumensänderung des Formhohlraums parallel zur Einströmrichtung des Kunststoffmaterials vorgenommen wird, wobei nach Anspruch 6 die Materialzuführung in den Formhohlraum und die Volumensänderung des Formhohlraums wenigstens annähernd in Vertikalrichtung vorgenommen werden. Das Fließverhalten des Kunststoffmaterials wird hierdurch so beeinflußt, daß zu jedem Zeitpunkt des Spritzgießvorgangs eine optimale Materialverteilung im Formhohlraum stattfindet und dadurch der gewünschte Zwischenaufbau entsteht.

Nach Anspruch 7 ist im Rahmen der Erfindung weiterhin vorgesehen, daß mehrere verschiedene Kunststoffkomponenten nacheinander in den Formhohlraum und ineinandergespritzt sowie dabei in diesem Formhohlraum mit sich gegenseitig ummantelnden Schichtenaufbau verteilt werden.

Nach Anspruch 8 ist es erfindungsgemäß aber auch möglich, daß die verschiedenen Kunststoffkomponenten gegeneinander zeitverschoben, dabei aber wenigstens zeitweilig gleichzeitig in den Formhohlraum gespritzt werden, wobei sie auch in diesem Falle mit sich gegenseitig ummantelndem Schichtenaufbau im Formhohlraum verteilt werden.

Ein anderes wesentliches Verfahrensmerkmal besteht nach der Erfindung gemäß Anspruch 9 darin, daß die Konditionierung bzw. Wärmebehandlung des Spritzlings vor dem und/oder während des Preßvorgangs lediglich an oder in der Nähe der Umfangsbereiche bzw. Randzone bewirkt wird.

Weiterhin ist vorgesehen, daß nach Anspruch 10 die nachkonditionierten Umfangsbereiche bzw. Randzonen des Spritzlings auf eine die Dicke der übrigen Bereiche unterschreitende Dicke gepreßt werden.

Als wichtig hat es sich aber auch herausgestellt, daß nach Anspruch 11 der Spritzling auf eine der Querschnittsform und/oder Abmessung des späteren Hohlkörpers entsprechende Flächenform und/oder -abmessung flachgepreßt wird.

Eine Vorrichtung zur Durchführung des erfindungsgemäßen Verfahrens ist nach den Merkmalen des Anspruchs 12 hauptsächlich dadurch gekennzeichnet, daß dem Formhohlraum ein dessen Querschnitt ausfüllender und zur Volumensänderung axial verschiebbarer Plunger- oder Tauchkolben zugeordnet sowie dabei sein Verschiebeweg begrenzt ist.

Als besonders empfehlenswert hat es sich dabei erwiesen, wenn nach Anspruch 13 bei der erfindungsgemäßen Vorrichtung Formhohlraum, Plunger- oder Tauchkolben und Düsenkopf wenigstens annähernd mit vertikaler Achslage ausgerichtet sind.

Als vorteilhaft hat es sich nach der Erfindung aber auch herausgestellt das Weiterbildungsmerkmal nach Anspruch 14 zu benutzen, gemäß welchem der Plunger- oder Tauchkolben von oben nach unten in den Formhohlraum hineinragt, während der Düsenkopf von unten nach oben an den Formhohlraum heranführbar ist.

Der Plunger- oder Tauchkolben kann dabei gemäß Anspruch 15 unter Gewichtsbelastung stehen, so daß das Volumen des Formhohlraums sich allein aufgrund der Quellströmung des in diesen eintretenden Kunststoffmaterials vergrößert.

Nach Anspruch 16 ist erfindungsgemäß aber auch die Möglichkeit vorgesehen, daß der Plunger- oder Tauchkolben mit dem Kolben eines, vorzugsweise doppelt wirkenden ausgelegten

Druckmittelzylinders in Stellverbindung steht. Damit läßt sich nämlich das Volumen des Formhohlraums durch pneumatische und/oder hydraulische Medien beeinflussen.

Bewährt hat sich nach der Erfindung auch ein Aufbau der Vorrichtung, bei welcher gemäß Anspruch 17 der Formhohlraum auf einem Dreh- oder Schiebetisch angeordnet oder in diesem ausgebildet ist, während der Düsenkopf an einem ortsfesten Gestell oder dergleichen sitzt, zu dem der Dreh- oder Schiebetisch relativ verstellbar vorgesehen ist. Diesem Dreh- oder Schiebetisch lassen sich dann auch alle weiteren Vorrichtungsteile zuordnen, die die schrittweise Weiterverarbeitung des Rohlings zum fertigen Hohlkörper durchführen. Es handelt sich hierbei bspw. um die Presse mit den Umformgesenken sowie um die Streckblas- und Auswerfervorrichtung.

Ein wichtiges Ausbildungsmerkmal der Erfindung besteht nach Anspruch 18 auch darin, daß der Düsenkopf als Mehrkanal-Düsenkopf mit zentraler Austrittsöffnung ausgebildet ist, der die Zuführung der unterschiedlichen Kunststoffkomponenten in den Formhohlraum ermöglicht.

Eine erfindungsgemäße Vorrichtung zur Durchführung des Verfahrens zeichnet sich nach Anspruch 19 aber auch noch ganz wesentlich dadurch aus, daß dem Formhohlraum auf dem Dreh- oder Schiebetisch eine Wärmebehandlungs- bzw. Konditionierungseinrichtung nachgeordnet und diese dabei auf bestimmte Umfangs- bzw. Flächenbereiche des Spritzlings ausgerichtet bzw. beschränkt ist.

Nach Anspruch 20 kann dabei die Wärmebehandlungs- bzw. Konditionierungseinrichtung zwischen der Spritzstation und der Preßstation angeordnet sein und aus steuer- bzw. regelbaren Heiz- und/oder Kühlelementen bestehen.

Nach Anspruch 21 läßt sich die Wärmebehandlungs- bzw. Konditionierungseinrichtung aber auch der Preßstation zuordnen, insbesondere in deren Gesenkformen unterbringen.

Für einen vorteilhaften und zweckmäßigen Arbeitsablauf hat es sich als empfehlenswert erwiesen, die Maßnahmen nach Anspruch 22 zu treffen, nämlich den Formhohlraum zwischen dem Arbeitsbereich des Düsenkopfes und dem Arbeitsbereich der Wärmebehandlungs- bzw. Konditionierungseinrichtung wechselsweise verlagerbar zu machen. Andererseits kann nach Anspruch 23 aber auch die Wärmebehandlungs- bzw. Konditionierungseinrichtung zumindest teilweise zwischen dem Arbeitsbereich der Preßstation und dem Arbeitsbereich der Reck-Blasstation verlagerbar gemacht werden.

Weitere Merkmale und Vorteile der Erfindung werden nachfolgend anhand einer Zeichnung ausführlich erläutert.

Hiernach zeigen

Figur 1 in rein schematischer Darstellung den grundsätzlichen Phasenablauf bei der erfindungsgemäßen Herstellung von Hohlkörpern aus thermoplastischen Kunststoffen,

Figur 2 in schematisch vereinfachtem Vertikalschnitt eine Vorrichtung zum Herstellen von Hohlkörpern aus thermoplastischen Kunststoffen in einer ersten Betriebsstellung,

Figur 3 die Vorrichtung nach Fig. 2 in einer zweiten Betriebsstellung, die

Figuren 4 bis 6 den in Fig. 2 mit IV gekennzeichneten Bereich der Vorrichtung in größerem Maßstab während dreier verschiedener Arbeitsphasen,

Figur 7 in größerem Maßstab und Seitenansicht den Mehrkanal-Düsenkopf der Vorrichtung mit zugeordneten Extrudern

Figur 8 eine Draufsicht auf die Anordnung nach Fig. 7 und

Figur 9 in weiter vergrößertem Maßstab einen Teilschnitt durch den Mehrkanal-Düsenkopf entlang der Linie IX-IX in Fig. 8.

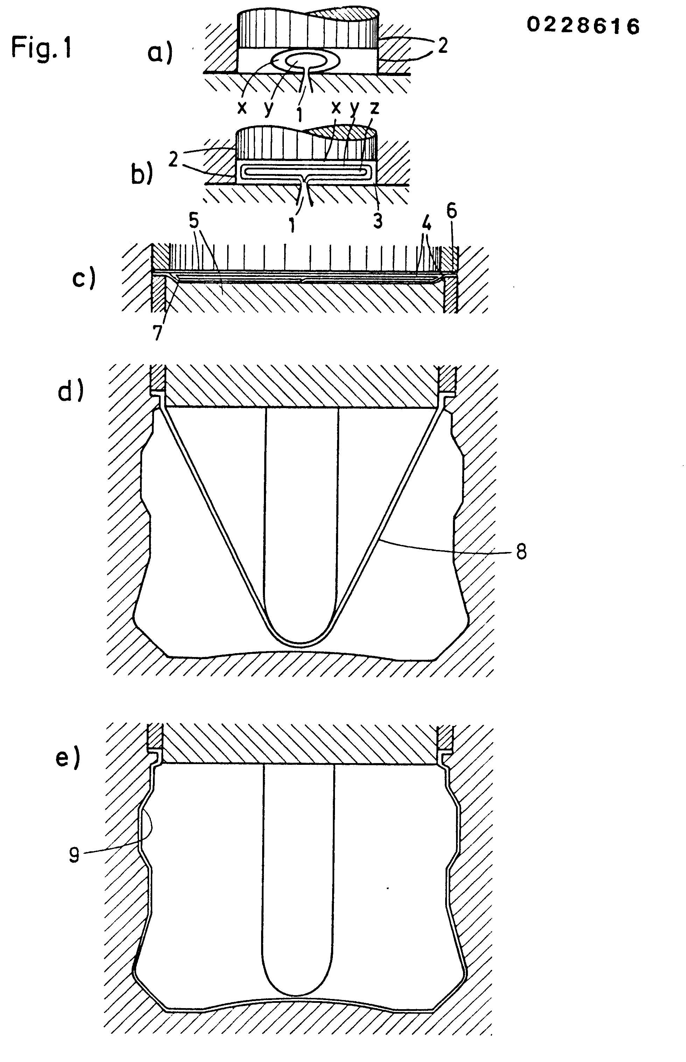

Aus Fig. 1 der Zeichnung sind die einzelnen Prozeßstufen a bis e zur Herstellung mmehrschichtiger Behälter aus thermoplastischen Kunststoffen dargestellt. In den Prozeßstufen a und b wird dabei ein, bspw. scheibenförmiger Vorformling aus mehreren, bspw. drei verschiedenen Kunststoff- bzw. Materialkomponenten durch Spritzgießen gefertigt. Dabei wird zunächst die Kunststoffkomponente x durch den Düsenkopf 1 in den Formhohlraum 2 vorgelegt. Daran anschließend wird dann die Kunststoffkomponente y mittels des Düsenkopfes 1 durch den Kern der Kunststoffkomponente x in diese eingespritzt. Schließlich wird dann, wiederum mittels des Düsenkopfes 1 noch die Kunststoffkomponente z durch den Kern der Kunststoffkompente y in diese eingespritzt. Am Ende des Füllvorgangs im Formhohlraum wird zunächst wieder mit einer geringen Menge der Kunststoffkomponente y die Durchtrittszone für die Kunststoffkomponente z in der Kunststoffkomponente y verschlossen, woraufhin anschließend mit einer geringen Menge der Kunststoffkomponente x in dieser auch der Durchtrittsbereich für die Kunststoffkomponente y aufgefüllt wird.

Aus den Phasenbildern a und b ist dabei erkennbar, daß die einzelnen Kunststoffkomponenten x, y und z sich innerhalb des Formhohlraums 2 mit einer einfachen Quellströmung verteilen, wenn der fertig gespritzte Kunststoff-Rohling 3 die Form einer zentral angespritzten Scheibe aufweist.

Der mit den Prozeßstufen a und b gebildete Kunststoff-Rohling 3 wird anschließend, also in noch warmem Zustand von außen her mindestens bereichsweise, und zwar vorzugsweise in der Nähe seines Umfangsbereichs bzw. seiner Randzone durch zusätzliche Wärmebehandlungen konditioniert. In diesen Bereichen bzw. Zonen wird dabei in der Regel die Temperatur der am Kunststoffrohling 3 außen liegenden Materialkomponenten x und gegebenenfalls auch y erhöht, um in der nachfolgenden Prozeßstufe c das Flachdrücken des Kunststoff-Rohlings 3 zu einem in seiner Flächenabmessung vergrößerten und hinsichtlich der Schichtdicke der einzelnen Kunststoff-Komponenten x, y und z verminderten, zugleich aber in der Struktur verdichtetes Preßteil 4 zu erhalten. Zwischen den Gesenkteilen 5 kann durch die Prozeßstufe c das Preßteil 4 mit einer Randzone 6 ausgeformt werden, die eine relativ zu den übrigen Flächenbereichen 7 wiederum verminderte Schichtdicke aufweist.

In der Prozeßstufe d werden dann das Preßteil 4 durch einen Reckvorgang in seiner Materialstruktur zunächst zu einem Teil 8 gestreckt, welches gleichzeitig bzw. anschließend durch Zuführung von Blasluft entsprechend der Prozeßstufe e zu dem fertigen Hohlkörper 9 umgeformt werden kann.

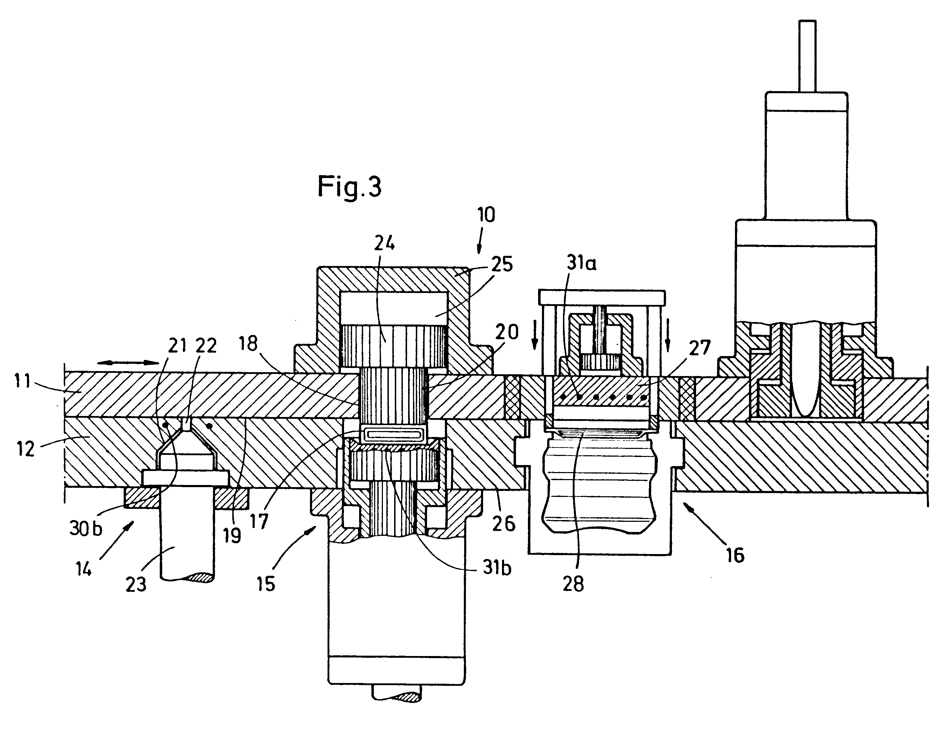

Die in den Fig. 2 und 3 gezeigte Vorrichtung 10 zum Herstellen von Hohlkörpern aus thermoplastischen Kunststoffen weist einen Schiebe- und/oder Drehtisch 11 auf, welcher auf einer ortsfesten Tragplatte 12, bspw. eines Untergestells, abgestützt ist und relativ zu dieser schrittweise bewegt werden kann.

Die Vorrichtung 10 umfaßt dabei bspw. eine Spritzgießstation 14, eine Preßstation 15, eine Reck-Blasstation 16 sowie eine Auswerferstation 13, wie das deutlich den Fig. 2 und 3 entnommen werden kann.

Eine wichtige Komponente der Vorrichtung 10 ist im vorliegenden Falle die Spritzgießstation 14, in welcher die Rohlinge 3 aus thermoplastischen Kunststoffen, bspw. in Form von Tabletten, Pillen oder auch Scheiben mit rundem, recheckigem, polygonem, elliptischem od.dgl. Grundriß gefertigt werden können. Die Rohlinge können aus konkav gewölbt sein.

Um das zu ermöglichen, ist im Dreh- oder Schiebetisch 11 ein Formhohlraum 18 ausgebildet, der nach unten, also gegen die ortsfeste Grundplatte 12 hin, über seinen gesamten Querschnitt offen ist, so daß er nur durch die Oberfläche 19 der ortsfesten Grundplatte 12 begrenzt werden kann.

Von oben her ragt in den Formhohlraum 18 ein dessen Querschnitt ausfüllender Plunger- oder Tauchkolben 20 hinein. Dieser ist dabei axial verschiebbar geführt, damit das Volumen des Formhohlraums 18 im Dreh- oder Schiebetisch 11 innerhalb bestimmter Grenzen variiert werden kann.

In der ortsfesten Platte 12 ist ein Mundstück 21 mit einem zentrisch angeordneten Durchlaßkanal 22 vorgesehen, wobei letzterer in der aus Fig. 2 ersichtlichen Stellung mit dem Formhohlraum 18 in Strömungsverbindung steht. In das Mundstück 21 ragt der Düsenkopf 23 hinein, welcher in der sche-

matischen Darstellung nach Fig. 1 das Bezugszeichen 1 aufweist. Über den Düsenkopf 23 und den Durchlaßkanal 12 kann die Kunststoffschmelze in den Formhohlraum 8 gepreßt werden.

Vorzugsweise ist der Düsenkopf 13 so ausgelegt, daß mit seiner Hilfe mehrere, bspw. drei, verschiedene Kunststoffkomponenten nacheinander in den Formhohlraum 18 gespritzt werden können. Der Düsenkopf 23 entspricht also dem in Fig. 1 schematisch angedeuteten Düsenkopf 1.

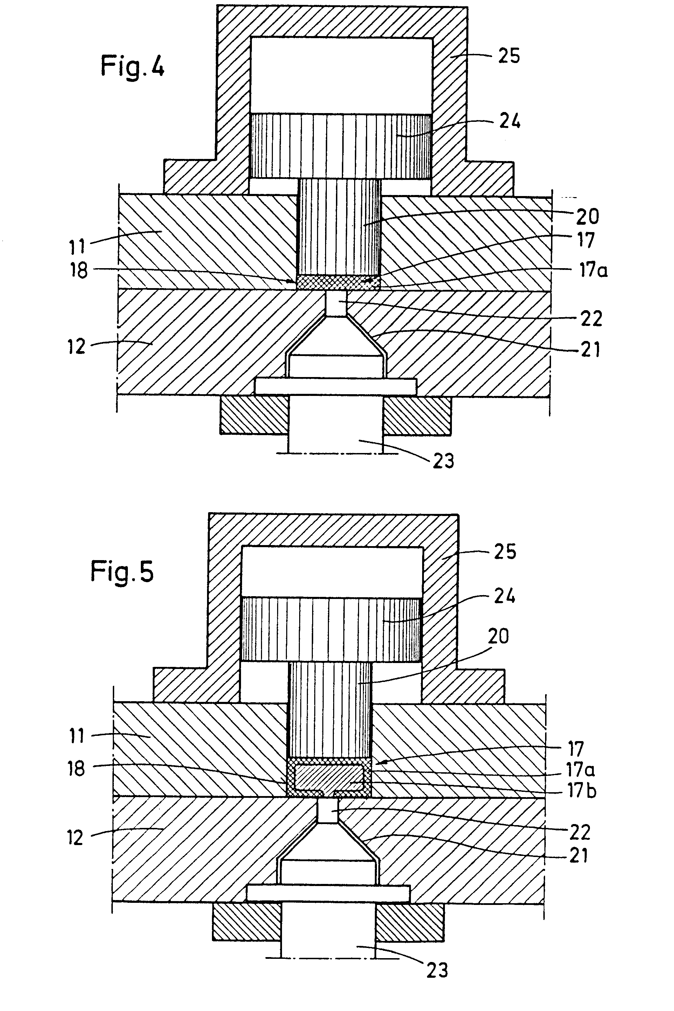

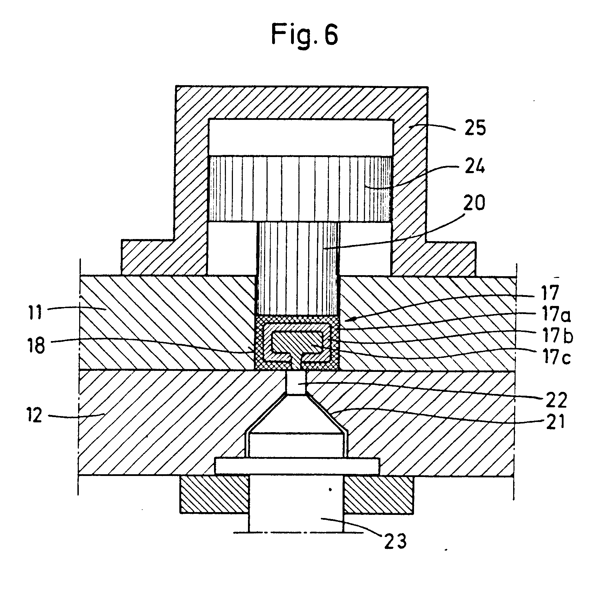

Beim Betrieb der Spritzstation 14 ist wichtig, daß der Formhohlraum 18 im Dreh- oder Schiebetisch 11 während jedes Spritzvorgangs mit einer der Eintritts- bzw. Füllgeschwindigkeit des jeweiligen Kunststoffmaterials angepaßten Geschwindigkeit von einem Minimalvolumen (Fig. 4) bis auf ein vorgegebenes Maximalvolumen (Fig. 6) verändert werden kann. Um das zu ermöglichen, ist der Plunger- oder Tauchkolben 20 innerhalb des Formhohlraums 18 axial verschiebbar angeordnet und dabei vorzugsweise nach beiden möglichen Verschieberichtungen hin in seinem Bewegungsausmaß begrenzt.

Besonders bewährt hat sich eine Ausbildung der Spritzgießstation 14, bei welcher der Formhohlraum 18, der Plunger- oder Tauchkolben 20 sowie dere Düsenkopf 23 wenigstens annähernd mit vertikaler Achslage ausgerichtet sind.

Der Plunger- oder Tauchkolben 20 ragt bei dem in der Zeichnung dargestellten Ausführungsbeispiel von oben nach unten in den Formhohlraum 18 hinein, während der Düsenkopf 23 von unten nach oben über das Mundstück 21 an den Formhohlraum 18 angeschlossen wird, wie das die Fig. 2 und 3 erkennen lassen.

In manchen Fällen reicht es aus, wenn der Plungerkolben 20 unter der Gewichtsbelastung eines wiederum kolbenartig verdickten Kopfteils 24 steht, so daß er selbsttätig innerhalb des Formhohlraums 18 in seine untere Endstellung gebracht werden kann. Angehoben wird dieser Plunger- oder Tauchkolben 20 dabei durch die von unten her in den Formhohlraum 18 eingespritzte Kunststoffschmelze, und zwar in Abhängigkeit von deren Eintritts- bzw. Füllgeschwindigkeit. Die Volumensänderung des Formhohlraums 18 wird hierbei also selbsttätig bzw. kontinuierlich vorgenommen.

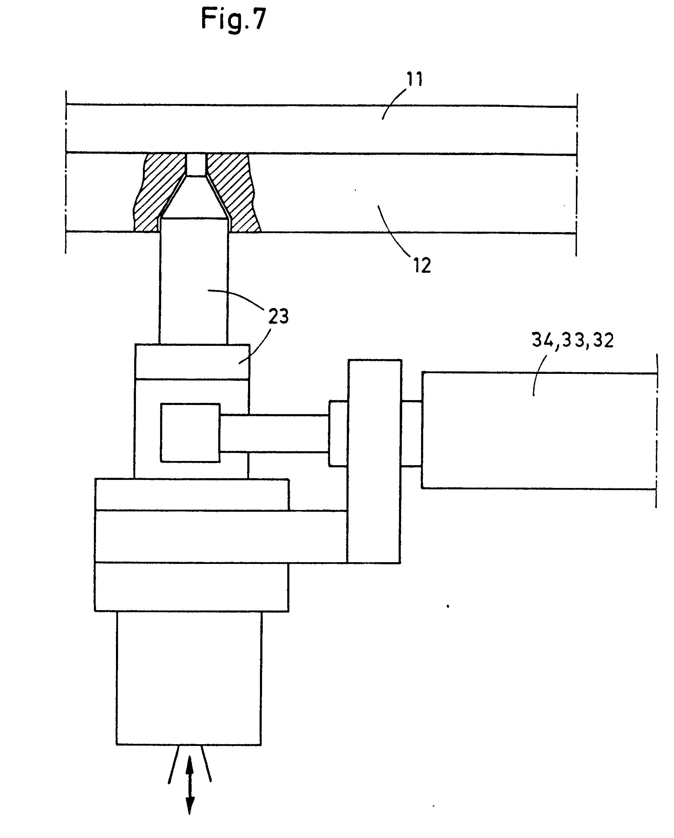

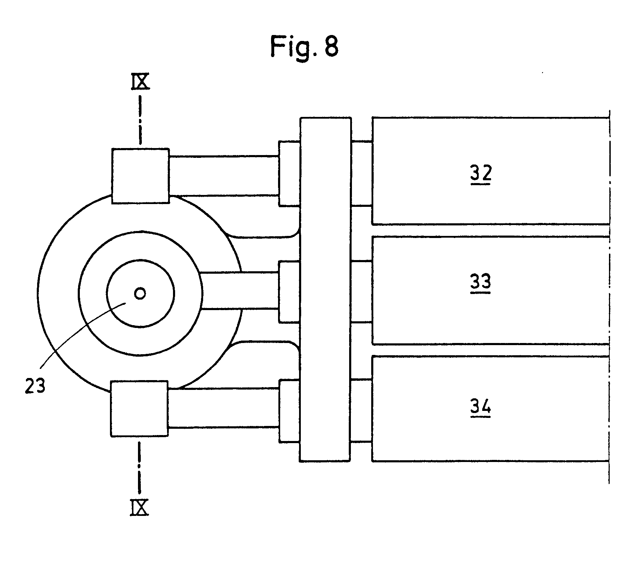

Der Plunger- oder Tauchkolben 20 kann jedoch auch mit dem Kolben 24 eines, vorzugsweise doppelt wirkend ausgelegten, Druckmittelzylinders 25 in Stellverbindung stehen, wie das dem in der Zeichnung dargestellten Ausführungsbeispiel zu entnehmen ist. Dieser Druckmittelzylinder 24 ist dabei auf dem dem Formhohlraum 18 enthaltenden Dreh- oder Schiebetisch 11 montiert, während der Düsenkopf 23 an einem ortsfesten Gestell oder dergleichen sitzt. Der Düsenkopf 23 kann, wie bereits erwähnt, als Mehrkanal-Düsenkopf mit zentraler Austrittsöffnung ausgebildet werden, damit sich relativ zueinander zeitverschoben auch mehrere verschiedene Kunststoffkomponenten in den Formhohlraum 18 einbringen lassen. Ein solcher Mehrkanal-Düsenkopf 23 ist in den Fig. 7 bis 9 der Zeichnung dargestellt.

Wenn der Plunger- oder Tauchkolben 20 mit einem Druckmittelzylinder 25 zusammenwirkt, kann die Volumensänderung des Formhohlraums 18 auch intermittierend bzw. diskontinuierlich vorgenommen werden. Die Volumensänderung läßt sich dabei in mehreren Schritten bzw. Stufen vornehmen, wobei die jeweilige Größenordnung dieser Volumensänderungen auf die Menge der nachfolgend einzuspritzenden Kunststoffschmelze exakt abstimmbar ist.

Damit eine optimale Verteilung der verschiedenen Kunststoffschmelzen innerhalb des Formhohlraums 18 und ineinander erreicht wird, wie das in Fig. 1 bei a und b gezeigt ist, hat

0228616

es sich besonders bewährt, wenn die Materialzuführung in den Formhohlraum 18 und dessen Volumensänderung wenigstens annähernd in Vertikalrichtung vorgenommen werden. Hierdurch wird nämlich erreicht, daß innerhalb des Formhohlraums 18 eine Quellströmung der Kunststoffschmelzen entsteht, die für eine weitestgehend gleichmäßige Verteilung aller Kunststoffkomponenten x, y und z innerhalb des Formhohlraums 18 und auch ineinander sicherstellt.

Der im Formhohlraum 18 fertiggestellte Rohling 17, welcher gemäß Fig. 1 das Bezugszeichen 3 hat, besteht dann aus mehreren, sich in ganz bestimmter Weise gegenseitig ummantelnden bzw. einschließenden Kunststoffschichten 17a, 17b und 17c, wie dies in Fig. 6 angedeutet ist.

Der im Formhohlraum 18 gespritzte Rohling 17 wird sodann durch entsprechende Bewegung des Dreh- oder Schiebetisches 11 relativ zur Grundplatte 12 in den Bereich der Preßstation 15 gebracht, wie das die Fig. 3 erkennen läßt. Dort wird dann durch den Plunger- bzw. Tauchkolben 20 der noch erhitzte Rohling 17 von oben nach unten aus dem Formhohlraum 18 in ein Untergesenk 26 gedrückt. Wenn dies geschehen ist, kehrt der Dreh- oder Schiebetisch 11 wieder in seine Grundstellung nach Fig. 2 zurück und zugleich gelangt das Obergesenk 27 der Preßstation 15 über deren Untergesenk 26. Die beiden Gesenke 26 und 27 werden dann, bspw. durch Druckmittelantriebe, gegeneinander bewegt, so daß der Rohling 17 zu einer in ihrem Außenumfang wesentlich vergrößerten, dafür aber in ihrer Dicke entsprechend verminderten Scheibe 28 zusammengedrückt wird. Innerhalb dieser Scheibe 28 werden dabei auch die verschiedenen Kunststoffschichten 17a bis 17c bei gleichbleibender Verteilung auf eine beträchtlich verminderte Dicke gebracht.

Die durch den Preßvorgang aus dem Kunststoffrohling 17 hergestellte Kunststoffscheibe 28 wird sodann mit Hilfe des Dreh- oder Schiebetisches 11 in den Bereich der Reck-Blasstation 16 gebracht (siehe Fig. 3) und dort anschließend durch Reck-Blasen zu einem Kunststoff-Hohlkörper 29, bspw. einem Weithalsgefäß, ausgeformt, wie das in Fig. 1 bei e wie auch in Fig. 2 angedeutet ist.

Selbstverständlich ist es auch möglich, in der Spritzgießstation 14 Kunststoff-Rohlinge 17 herzustellen, die nur aus einem einzigen Kunststoffmaterial bestehen. Andererseits liegt es aber auch auf der Hand, daß die Kunststoff-Rohlinge 17 sich in der Spritzgießstation 14 auch aus mehr als drei Kunststoffkomponenten spitzgießen lassen, die sich dann jeweils schichtweise gegenseitig ummanteln.

Obwohl es sich in der Praxis als besonders vorteilhaft erwiesen hat, die Kunststoffkomponenten x, y und z jeweils zentral in den Formhohlraum 18 einzuspritzen, besteht natürlich auch die Möglichkeit, die verschiedenen Kunststoffkomponenten x, y und z an verschiedenen Stellen in den Formhohlraum 18 einzuführen. Eine optimale und problemlose Materialverteilung wird jedoch durch die zentrale Kunststoffzuführung in den Formhohlraum 18 gewährleistet, wie sie bei den Ausführungsbeispielen gezeigt ist.

Ein wichtiges Kriterium für die Herstellung von Hohlkörpern aus thermoplastischen Kunststoffen liegt auch darin, daß der fertig gespritzte Rohling 17 vor und/oder während seiner Umformung zu der relativ dünnen aber großflächigen Scheibe 28 - die in Fig. 1 bei c mit dem Bezugszeichen 4 versehen ist -von außen her mindestens bereichsweisse durch zusätzliche Wärmebehandlungen konditioniert werden kann. Um das zu ermöglichen, ist der Spritzstation 14 bzw. dem Formhohlraum 18 auf dem Dreh- oder Schiebetisch 11 eine besondere Wärmebehandlungs- bzw. Konditionierungseinrichtung zu-und/oder nachgeordnet. Eine solche Wärmebehandlungs- und Konditionierungseinrichtung 30 kann sich dabei in der unmittelbaren Nachbarschaft des Formhohlraums 18 befinden. Dabei läßt sie sich bspw. durch Heiz- und/oder Kühlelemente oder auch -kanäle 30a im Plunger- oder Tauchkolben 20 bilden. Es können aber auch Heiz- bzw. Kühlelemente oder -kanäle 30b in der Tragplatte 12 vorgesehen sein.

Erkennbar ist aus den Fig. 2 und 3 aber auch, daß eine Wärmebehandlungs- bzw. Konditionierungseinrichtung 31 unmittelbar der Preßstation 15 zugeordnet werden kann. In diesem Falle befinden sich die Heiz- bzw. Kühlelemente oder -kanäle 31a im Obergesenk 27 und ähnliche Heiz- oder Kühlelemente bzw. -kanäle 31b auch im Untergesenk 28.

Die Wärmebehandlungs- bzw. Konditionierungseinrichtungen 30 und 31 sind dabei so angeordnet bzw. aufgebaut, daß sie nur auf bestimmte Umfangs- bzw. Flächenbereiche des Rohlings 17 bzw. der Scheibe 28 einwirken können, und daß sie sich hinsichtlich ihrer Temperatur steuern und regeln lassen.

Die Wärmebehandlungs- bzw. Konditionierungseinrichtungen 30 und 31 sollten dabei eine Ausbildung haben, daß sie auf den Rohling 17 bzw. die Scheibe 28 vor dem und/oder während des Preßvorgangs lediglich an oder in der Nähe der Umfangsbereiche bzw. Randzone einwirken.

Aus den Fig. 2 und 3 ist ersichtlich, daß die nachkonditionierten Umfangsbereiche bzw. Randzonen des Rohlings 17 beim Pressen der Scheibe 28 auf eine Dicke gebracht werden können, welche die Dicke der übrigen Bereiche dieser Scheibe 28 beträchtlich unterschreitet. Vergleichsweise wird in diesem Zusammenhang auf Fig. 1 der Zeichnung bei c hingewiesen, wo die Umfangsbereiche bzw. Randzonen 6 auf eine wesentlich geringere Dicke gespreßt sind als die übrigen Bereiche 7 der Scheibe 4. Die Umrißform der flachgepreßten Scheibe 28 bzw. 4 wird zwischen den beiden Gesenken 26 und 27 der Preßstation 15 so gestaltet, daß sie möglichst der Querschnittsform und/oder -abmessung des späteren Hohlkörpers 9 (Fig. 1) bzw. 29 (Fig. 2) entspricht.

In Fig. 2 ist die Herstellung des Hohlkörpers 29 aus der flachgepreßten Scheibe 28 im Bereich der Reck-Blasstation 16 ersichtlich, während dort auch angedeutet ist, wie im Bereich der Auswerferstation 13 der fertig geblasene Hohlkörper 29 aus der Blasform entfernt werden kann.

Fig. 3 macht noch deutlich, wie die in der Preßstation 15 flachgedrückte Scheibe 28 in den Bereich der Reck-Blasstation 16 gelangt, während der vorher gespritzte Rohling aus dem Formhohlraum 18 in die Preßstation 15 gebracht wird.

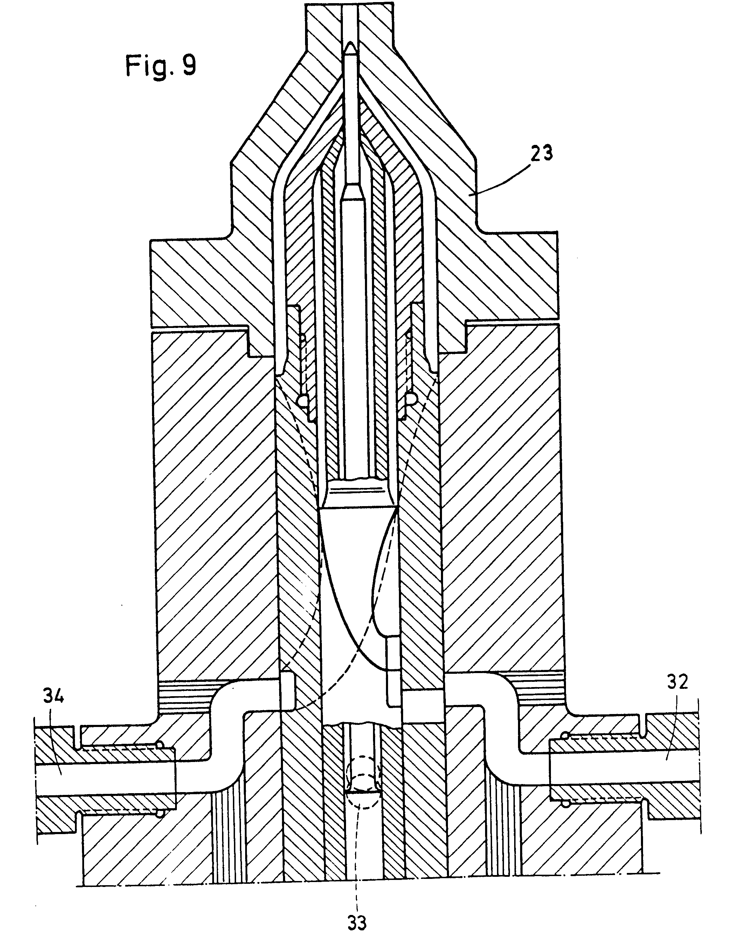

In den Fig. 7 bis 9 ist der Düsenkopf 23 in seiner Anordnung und Ausbildung ausführlicher zu sehen. Dabei ist erkennbar, daß er mit drei verschiedenen Extrudern 32, 33 und 34 in Wirkverbindung steht, die unterschiedliche Kunststoffkomponenten aufschmelzen und ihm diese zuführen können. Fig. 9 macht dabei besonders deutlich, daß der Düsenkopf 23 die Ausbildung eines Mehrkanal-Düsenkopfes aufweist, der mit einem zentralen Austrittskanal 232a versehen ist, welcher mit dem Anschlußkanal 22 des Mundstücks 21 in der Tragplatte 12 korrespondiert. Eine exakte Mengendosierung der unterschiedlichsten Kunststoffkomponenten in den Formhohlraum 18 läßt sich dadurch bewerkstelligen.

Patentansprüche

1. Verfahren zum Herstellen von Hohlkörpern aus thermoplastischen Kunststoffen, bei welchem zunächst ein kompakter Rohling, wie z. B. eine Tablette, eine Pille, eine Scheibe oder dergleichen, insbesondere mit einem Schichtenaufbau aus mehreren verschiedenen und sich gegenseitig umhüllenden bzw. ummantelnden Kunststoffkomponenten, durch Spritzgießen in einem Formhohlraum gebildet wird, bei welchem dann dieser Rohling in erhitztem Zustand durch einen Preßvorgang in seiner Dicke vermindert und zugleich in seiner Flächenabmessung vergrößert wird, und bei welchem schließlich aus dem Preßteil, wiederum in erhitztem Zustand, durch Recken und Blasen in einer Form der Hohlkörper gebildet wird,
d a d u r c h   g e k e n n z e i c h n e t ,
(a) daß das jeweilige Kunststoffmaterial (x bzw. y bzw. z oder 17a, 17b, 17c) in einen begrenzten Formhohlraum (2 oder 18), diesen ausfüllend, eingespritzt wird (22, 23),
(b) daß dabei während jedes Spritzvorgangs (22, 23) der Formhohlraum (2 oder 18) mit einer der Eintritts- bzw. Füllgeschwindigkeit des jeweiligen Kunststoffmaterials (x bzw. y bzw. z oder 17a, 17b, 17c) angepaßten Geschwindigkeit von einem der Menge des ersten Kunststoffmaterials (x oder 17a) entsprechenden Minimalvolumen; Fig. 4 bis auf ein der Gesamtlänge aller Kunststoffmaterialien (x bzw. y bzw. z oder 17a, 17b, 17c) vorgegebenes Maximalvolumen (Fig. 6) verändert wird,
(c) daß dann der Spritzling (3 bzw. 17) in noch erwärmtem Zustand von außen her mindestens bereichsweise sowie zuvor bzw. danach aus dem Formhohlraum (2 bzw. 18) gebracht wird,

(d) und daß daraufhin und/oder währenddessen der Spritzling (3 bzw. 17) zu dem Preßteil (4 bzw. 18) umgeformt und verdichtet

(e) sowie dieses Preßteil (4 bzw. 28) anschließend zum Hohlkörper (9 bzw. 29) gereckt und geblasen wird (Fig. 1d) und Fig. 1e) sowie Fig. 2).

2. Verfahren nach Anspruch 1, dadurch gekennzeichnet, daß die Volumensänderung (20) des Formhohlraums (18) stetig bzw. kontinuierlich vorgenommen wird.

3. Verfahren nach einem der Ansprüche 1 und 2, dadurch gekennzeichnet, daß das Volumen des Formhohlraumes (18) durch Quellströmung des Kunststoffmaterials verändert wird.

4. Verfahren nach Anspruch 1, dadurch gekennzeichnet, daß die Volumensänderung (20) des Formhohlraums (18) intermittierend bzw. diskontinuierlich vorgenommen wird.

5. Verfahren nach einem der Ansprüche 1 bis 4, dadurch gekennzeichnet, daß die Volumensänderung (20) des Formhohlraumes (18) parallel zur Einströmrichtung (22) des Kunststoffmaterials vorgenommen wird.

6. Verfahren nach einem der Ansprüche 1 bis 5, dadurch gekennzeichnet, daß die Materialzuführung (22) in den Formhohlraum (18) und die Volumensänderung (20) des Formhohlraums (18) wenigstens annähernd in Vertikalrichtung vorgenommen werden (Fig. 2 bis 6).

7. Verfahren nach einem der Ansprüche 1 bis 6, dadurch gekennzeichnet, daß mehrere verschiedene Kunststoffkomponenten (x, y, z bzw. 7a, 7b, 7c) nacheinander in den Formhohlraum (18) und ineinandergespritzt sowie dabei in diesem mit sich gegenseitig ummantelnden Schichtenaufbau verteilt werden (Fig. 1 bzw. 4 bis 6).

8. Verfahren nach einem der Ansprüche 1 bis 7, dadurch gekennzeichnet, daß die verschiedenen Kunststoffkomponenten (x, y, z bzw. 7a, 7b, 7c) gegeneinander zeitverschoben, dabei aber wenigstens zeitweilig gleichzeitig in den Formhohlraum (18) gespritzt werden (22, 23).

9. Verfahren nach einem der Ansprüche 1 bis 8, dadurch gekennzeichnet, daß die Konditionierung bzw. Wärmebehandlung (30, 31) des Rohlings (17) vor dem und/oder während des Preßvorgangs (15) lediglich an oder in der Nähe der Umfangsbereiche bzw. Randzone (6; Fig. 1) bewirkt wird.

10. Verfahren nach Anspruch 9, dadurch gekennzeichnet, daß die nachkonditionierten Umfangsbereiche bzw. Randzonen (6; Fig. 1) des Rohlings (3 bzw. 17) auf eine die Dicke der übrigen Bereiche (7) unterschreitende Dicke gepreßt werden (Fig. 1 bis 3).

11. Verfahren nach mindestens einem der Ansprüche 1 bis 10, dadurch gekennzeichnet, daß der Rohling (3 bzw. 17) auf eine der Querschnittsform und/oder -abmessung des späteren Hohlkörpers (9 bzw. 29) entsprechende Flächenform und/oder -abmessung flachgepreßt wird (Fig. 1 bis 3).

12. Vorrichtung zur Durchführung des Verfahrens nach einem oder mehreren der Ansprüche 1 bis 11, bei der mit einem Formhohlraum ein von mindestens einem Extruder mit thermoplastischem Kunststoffmaterial beaufschlagbarer Düsenkopf verbindbar ist, d a d u r c h g e k e n n z e i c h n e t, daß dem Formhohlraum (18) ein dessen Querschnitt ausfüllender und zur Volumensänderung axial verschiebbarer Plunger- oder Tauchkolben (20) zugeordnet sowie dabei sein Verschiebeweg begrenzt ist.

13. Vorrichtung nach Anspruch 12, d a d u r c h g e k e n n z e i c h n e t, daß Formhohlraum (18), Plunger- oder Tauchkolben (20) und Düsenkopf (23) wenigstens annähernd mit vertikaler Achslage ausgerichtet sind (Fig. 2 bis 6).

14. Vorrichtung nach einem der Ansprüche 12 und 13, d a d u r c h g e k e n n z e i c h n e t, daß der Plunger- oder Tauchkolben (20) von oben nach unten in den Formhohlraum (18) hineinragt, während der Düsenkopf (23) von unten nach oben an den Formhohlraum (18) anschließt (21, 22).

15. Vorrichtung nach einem der Ansprüche 12 bis 14, d a d u r c h g e k e n n z e i c h n e t, daß der Plunger- oder Tauchkolben (20) unter Gewichtsbelastung (24) steht.

16. Vorrichtung nach einem der Ansprüche 12 bis 15, d a d u r c h g e k e n n z e i c h n e t, daß der Plunger- oder Tauchkolben (20) mit dem Kolben (24) eines, vorzugsweise doppelt wirkend ausgelegten Druckmittelzylinder (25) in Stellverbindung steht (Fig. 2 bis 6).

17. Vorrichtung nach einem der Ansprüche 12 bis 16, dadurch gekennzeichnet, daß der Formhohlraum (18) auf einem Dreh- oder Schiebetisch (11) angeordnet oder in diesem ausgebildet ist, während der Düsenkopf (23) an einem ortsfesten Gestell (12) oder dergleichen sitzt, zu dem der Dreh- oder Schiebetisch (11) relativ verstellbar vorgesehen ist (Fig. 2 und 3).

18. Vorrichtung nach einem der Ansprüche 12 bis 17, dadurch gekennzeichnet, daß der Düsenkopf (23) als Mehrkanal-Düsenkopf mit zentraler Austrittsöffnung (23a) ausgebildet und über einen Kanal (22) eines Mundstücks (21) mit dem Formhohlraum (18) verbindbar ist (Fig. 2, 3, 7 und 9).

19. Vorrichtung nach einem der Ansprüche 12 bis 18 zur Durchführung des Verfahrens nach einem oder mehreren der Ansprüche 1 bis 11, dadurch gekennzeichnet, daß dem Formhohlraum (18) auf dem Dreh- oder Schiebetisch (11) mindestens eine Wärmebehandlungs- bzw. Konditionierungseinrichtung (30, 31) zu- und/oder nachgeordnet und diese dabei auf bestimmte Umfangs- bzw. Flächenbereiche des Rohlings (17) ausgerichtet bzw. beschränkt ist.

20. Vorrichtung nach Anspruch 19, dadurch gekennzeichnet, daß die Wärmebehandlungs- bzw. Konditionierungseinrichtung (30, 31) zwischen der Spritzstation (15) und der Preßstation (16) angeordnet ist und aus steuer- bzw. regelbaren Heiz- und/oder Kühlelementen bzw. -kanälen besteht.

21. Vorrichtung nach Anspruch 19,
d a d u r c h g e k e n n z e i c h n e t ,
daß die Wärmebehandlungs- bzw. Konditionierungseinrichtungen (31) der Preßstation (16) zugeordnet, insbesondere in deren Gesenkformen (26, 27) untergebracht sind.

22. Vorrichtung nach einem der Ansprüche 19 bis 21,
d a d u r c h g e k e n n z e i c h n e t ,
daß der Formhohlraum (18) zwischen dem Arbeitsbereich des Düsenkopfes (23) und dem Arbeitsbereich der Wärmebehandlungs- bzw. Konditionierungseinrichtung (31) wechselweise verlagerbar ist (Fig. 2 und 3).

23. Vorrichtung nach einem der Ansprüche 19 bis 22,
d a d u r c h g e k e n n z e i c h n e t ,
daß die Wärmebehandlungs- bzw. Konditionierungseinrichtung (31) zumindest teilweise zwischen dem Arbeitsbereich der Preßstation (15) und dem Arbeitsbereich der Reck-Blasstation (16) verlagerbar ist (Fig. 2 und 3).

0228616

Fig. 1
a)
2
x
y
1
b)
2
x
y
z
3
c)
5
4
6
7
d)
8
e)
9

"Blasluftzuführung"
Fig:2
10
24
30a
25
31a
27
IV
15
20
11
18
31
12
17
21
22
30b
19
26
31b
28
14
23
29
16

10
24
25
31a
21 22
18
20
27
11
12
30b
19
17
26
14
23
15
31b
28
16

Fig.3

0228616

Fig.4
25
24
20
17
17a
11
18
22
12
21
23

Fig.5
25
24
20
11
17
18
17a
17b
22
12
21
23

Fig. 6

25
24
20
17
17a
17b
17c
11
18
22
12
21
23

Fig.7

11
12
23
34,33,32

Fig. 8

IX
IX
32
33
34
23

Fig. 9

23
34
32
33